# EUROPÄISCHE PATENTSCHRIFT

(11) **EP 1 408 261 B1**
(45) Veröffentlichungstag und Bekanntmachung des Hinweises auf die Patenterteilung: **07.06.2006**
(21) Anmeldenummer: 03021524.8
(22) Anmeldetag: 24.09.2003
(51) Int. Cl.: F16J 15/12, F02B 77/13, F16J 15/06

(54) **Dichtelement**
Seal element
Elément d'étanchéité

(30) Priorität: 11.10.2002 DE 10247559
(43) Veröffentlichungstag der Anmeldung: 14.04.2004
(73) Patentinhaber: Federal-Mogul Sealing Systems Bretten GmbH, 75015 Bretten (DE)
(72) Erfinder: Salameh, Ralf, Dipl.-Ing., 75053 Gondelsheim (DE)

(56) Entgegenhaltungen:
- EP-A- 1 045 174
- DE-A- 19 701 198
- DE-C- 10 100 934

## Beschreibung

Die Erfindung betrifft eine Flachdichtung bestehend aus einem Elastomermaterial mit zueinander beabstandeten Dichtprofilen aus Elastomermaterial, sowie mit einem metallischen Verstärkungselement.

Dichtungen, insbesondere aus elastomeren Werkstoffen, zwischen gehäuseartigen Bauteilen von Verbrennungskraftmaschinen, müssen heute einer Vielzahl von Anforderungen gerecht werden, die über ihre eigentliche Dichtfunktion weit hinaus gehen. Die Produktentwicklung berücksichtigt neben den spezifischen Werkstoffeigenschaften der Elastomere und den auftretenden Mediendrücken auch die speziellen geometrischen Bedingungen der Einbaustellen. Insbesondere ein Schwingen der Anbauteile, wobei hier im Besonderen Resonanzkörper, wie beispielsweise Gehäusedeckel, Zylinderkopfhauben oder Öldeckel genannt werden, können zu einer unangenehmen Geräuschentwicklung führen. Damit die Schwingungen der Verbrennungskraftmaschine nicht bzw. nur gedämpft an die Anbauteile übertragen werden, ist es allgemein üblich, elastomere Dichtungsprofile im Bereich der Anbauteile vorzugeben, die dann für eine akustische Entkopplung der Anbauteile sorgen. Durch diese Maßnahme kann die Geräuschentwicklung häufig beträchtlich reduziert werden. Auch auf Grundlage neuer gesetzlicher Bestimmungen im Bereich der Lärmemmission von Kraftfahrzeugen müssen die Anbauteile am Motor akustisch entkoppelt werden. Eine Form von Dichtungen, die zur akustischen Entkopplung von insbesondere Gehäusedeckeln eingesetzt wird, ist die Elastomerdichtung mit einem T-Profil. Diese Formdichtung ist aufgrund ihrer großen dichtenden elastomeren Bauhöhe in der Lage, ein weites Feld an Maß- und Formtoleranzen an den Umgebungsbauteilen zu überbrücken. Der große Verpressungsweg der Dichtung ermöglicht einen sehr guten Ausgleich von Unebenheiten.

Um die Formsteifigkeit gattungsgemäßer Dichtungen zu erfüllen wird in dem Aufsatz,, ,,Elastomere Formdichtungen für ruhende Bauteile am Motor "aus der Zeitschrift Kautschuk Gummi Kunststoffe, Jahrgang 46, Nr. 12/93, Seiten 983 bis 988, vorgeschlagen, die reinen Elastomerdichtungen zu versteifen. Bei diesen versteiften Dichtungen wird das Elastomer an oder um einen festen Trägerkörper, zum Beispiel aus Aluminium, Stahlblech oder Kunststoff vulkanisiert.
Dem Aufsatz sind neben T-förmigen Dichtungen auch Flachdichtungen zu entnehmen, die in ihren Kantenbereichen mit Dichtprofilen versehen sind. Es werden verschiedene Dichtungstypen beschrieben, die einen Trägerrahmen beinhalten oder bei denen an einen Trägerrahmen ein Dichtungsprofil befestigt ist. Dieser Trägerrahmen dient dabei stets zur Versteifung oder als Distanzelement der Elastomerdichtung. Dass mittels des Trägerrahmens eine gezielte Beeinflussung der Härte der Dichtung vorgenommen werden kann, ist diesem Aufsatz nicht zu entnehmen.
Der DE-C 372 45 15 ist eine Flachdichtung zu entnehmen, bestehend aus einem flachen, von einem Metallblech gebildeten Träger, mit einer im Siebdruckverfahren aufgetragenen in ihrer Dicke zusammendrückbaren Dichtungsauflage, die eine gitterartige Struktur aufweist. Die Dichtungsauflage soll hierbei als Raster mit sechseckwabenförmig gestalteten Rasteröffnungen und Stegen ausgebildet sein und den Träger ganzflächig bedecken.
Der JP-A 00 080 28707 ist eine Flachdichtung zu entnehmen, die mit beabstandeten Durchgangsöffnungen versehen ist, wobei zwischen einzelnen der Durchgangsöffnungen etwa linsenartig ausgebildete Erhebungen angeordnet sind. Diese Elemente dienen jedoch ausschließlich dem Zwecke der Abdichtung.
Die DE 197 01 198 A offenbart einen Deckel bestehend aus einem Innenteil und einem Aussenteil die durch drei Spalte 6 getrennt sind. In den Spalten ist ein Elastomerkörper eingespritzt um eine dichte Verbindung zwischen dem Innen- und Aussenteil zu erzeugen. Darüber hinaus ist ein Dichtungsring vorgesehen. Die Schallentkopplung erfolgt über die Spalte und über kurze stabile Stege, die dafür Sorgen, dass nur kleine Körperschallbrücken vorhanden sind.
Aus der EP 1 045 174 A ist eine Dichtung mit einem Rahmen zu entnehmen. In der Dichtung sind keine Elemente zur Schallentkopplung vorgesehen.

Der Erfindung liegt die Aufgabe zugrunde, eine Flachdichtung bereitzustellen die zur Reduzierung der Schallabstrahlung Entkopplungselemente aufweist, wobei ein einfacher Aufbau und eine einfache Fertigungstechnik angestrebt wird.

Diese Aufgabe wird durch die Merkmale des Patentanspruch 1 gelöst.

Vorteilhafte Weiterbildungen des Erfindungsgegenstandes sind den Unteransprüchen zu entnehmen.
Zwischen, insbesondere zwei Dichtprofilen, befinden sich in vorgebbaren Abständen die der akustischen Entkopplung dienenden Elemente, die vorteilhafterweise etwa halbkugelförmig ausgebildet sind. Neben einer einfachen Entformung bauen diese halbkugelartig ausgebildeten Elemente, bedingt durch ihre Geometrie bei zunehmender Verpressung eine immer größer werdende Kraft auf. Über die Geometrieanzahl und Verteilung, über die Fläche gesehen, kann auf das System Einfluß genommen werden und die Abstimmung zwischen Dichtfunktion und akustischer Entkopplung durch gezielte Beeinflussung verbessert werden.
Des weiteren besteht die Möglichkeit, den Materialeinsatz der Flachdichtung bezüglich der zum Einsatz gelangenden Elastomermenge ebenfalls zu reduzieren.
Der Erfindungsgegenstand ist anhand eines Ausführungsbeispieles in der Zeichnung dargestellt und wird wie folgt beschrieben. Es zeigen:
- Figur 1: Teilschnitt durch eine elastomere Flachdichtung
- Figur 2 und 3: Schnitte durch die Flachdichtung gemäß Figur 1

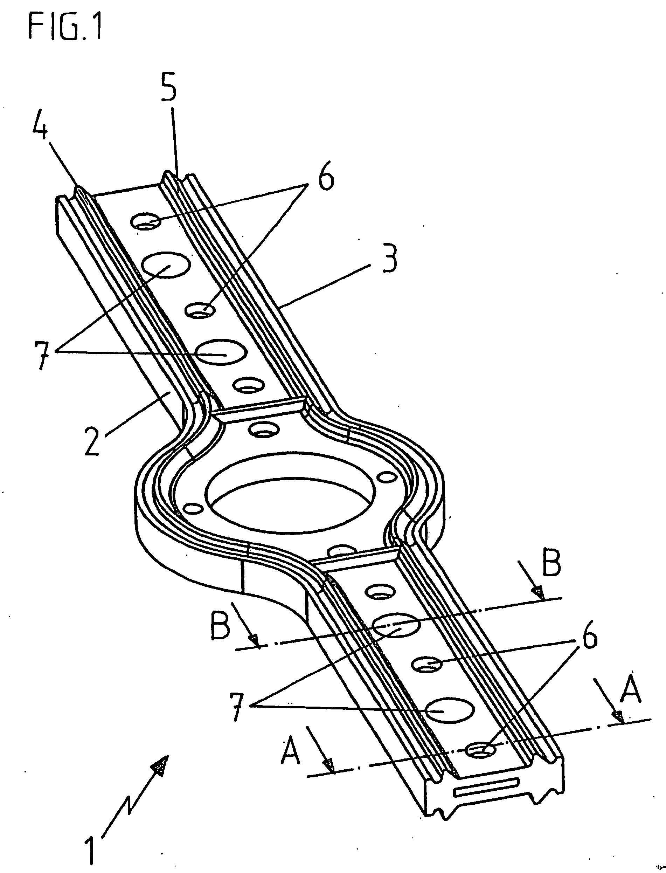

Figur 1 zeigt in Teilansicht ein aus Elastomermaterial bestehende Flachdichtung 1. Selbige weist in ihren Randbereichen 2, 3 Dichtprofile 4, 5 auf. Im Bereich der Erstreckung der Flachdichtung 1 sind mehrere Durchgangslöcher 6 vorgesehen. Zwischen den Dichtprofilen 4, 5 sowie den Löchern 6 sind im Querschnitt etwa halbkugelförmig ausgebildete Elemente 7 vorgesehen, die der akustischen Entkopplung dienen, sobald die Flachdichtung 1 zwischen Resonanzkörpern, wie beispielsweise Gehäusedeckeln, Zylinderkopfhauben, Ölhauben, Ansaugeinrichtungen oder dergleichen, verbaut ist.

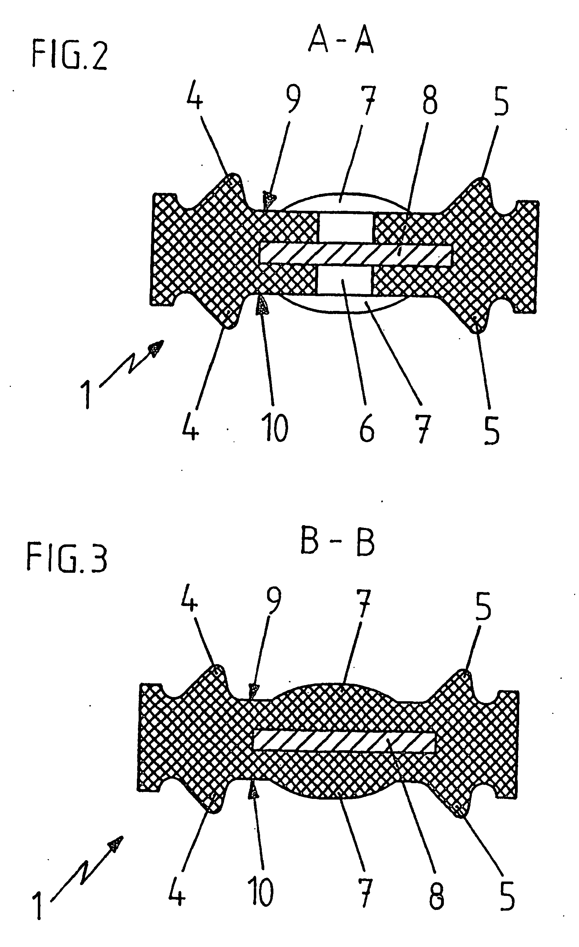

Die Figuren 2 und 3 zeigen Querschnitte durch die Flachdichtung gemäß Schnitten A-A und B-B der Figur 1. Der Schnitt A-A ist hierbei durch eines der Durchgangslöcher 6 geführt und der Schnitt B-B durch eines der Elemente 7. Die Flachdichtung 1 ist mittels eines Metallelementes 8 verstärkt. Erkennbar sind die Dichtprofile 4, 5. Selbige sind sowohl auf der einen Stirnseite 9 als auch auf der anderen Stirnseite 10 der Flachdichtung 1 angeordnet. Der Querschnitt der Elemente 7 ist, wie in Figur 1 dargestellt, etwa halbkugelförmig vorgesehen. Die Elemente 7 nehmen mehr als 50% der zwischen den Dichtprofilen 4, 5 gebildeten Grundfläche ein. Die Elemente 7 weisen in diesem Beispiel eine Höhe bezüglich der Dichtprofile 4, 5 auf, die unterhalb von 50 % der Höhe der Dichtprofile 4, 5 liegt.

## Patentansprüche

1. Flachdichtung, bestehend aus einem Elastomermaterial mit zueinander beabstandeten Dichtprofilen (4, 5) aus Elastomermaterial, sowie mit einem metallischen Verstärkungselement (8) **dadurch gekennzeichnet, dass** zwischen den Dichtprofilen (4,5) in vorgegebenen Abständen ebenfalls aus Elastomermaterial bestehende Elemente (7) vorgesehen sind, die zur akustischen Entkopplung der Flachdichtung dienen und eine Höhe aufweisen, die 30 % bis 50 % der Höhe der Dichtprofile (4, 5) beträgt.

2. Flachdichtung nach Anspruch 1, **dadurch gekennzeichnet, dass** die Elemente (7), vom Querschnitt her, etwa halbkugelförmig ausgebildet sind.

3. Flachdichtung nach Anspruch 1 oder 2, **dadurch gekennzeichnet, dass** sich die Elemente (7) mit vorgegebenen seitlichen Abstand zu den Dichtprofilen (4, 5) erstrecken.

4. Flachdichtung nach einem der Ansprüche 1 bis 3, **dadurch gekennzeichnet, dass** die Elemente (7) einen Flächenanteil von mehr als 50% zwischen den Dichtprofilen (4, 5) einnehmen.

5. Flachdichtung nach einem der Ansprüche 1 bis 4, **dadurch gekennzeichnet, dass** sowohl die Dichtprofile (4, 5) als auch die Elemente (7) auf beiden Stirnseiten (9, 10) des metallischen Verstärkungselementes (8) vorgesehen sind.

## Claims

1. Flat gasket, comprising an elastomer material, having seal profiles (4, 5) which are at a spacing from each other and made of an elastomer material, and also having a metallic reinforcing element (8), **characterised in that**, between the seal profiles (4, 5) at prescribed spacings, elements (7) likewise comprising elastomer material are provided, which elements serve for acoustic decoupling of the flat gasket and have a height which is 30% to 50% of the height of the seal profiles (4, 5).

2. Flat gasket (1) according to claim 1, **characterised in that** the elements (7), with respect to the cross-section, have an approximately hemispherical configuration.

3. Flat gasket (1) according to claim 1 or 2, **characterised in that** the elements (7) extend with a prescribable lateral spacing relative to the seal profiles (4, 5).

4. Flat gasket (1) according to one of the claims 1 to 3, **characterised in that** the elements (7) occupy a proportion of the surface of more than 50% between the seal profiles (4, 5).

5. Flat gasket according to one of the claims 1 to 4, **characterised in that** both the seal profiles (4, 5) and the elements (7) are provided on both end-sides (9, 10) of the metallic reinforcing element (8).

## Revendications

1. Garniture d'étanchéité plate, réalisée dans un matériau élastomère, comportant des profils d'étanchéité (4, 5) en matériau élastomère, écartés l'un de l'autre, ainsi qu'un élément de renforcement (8) métallique, **caractérisée en ce qu'**il est prévu, entre les profils d'étanchéité (4, 5),
des éléments (7) également en matériau élastomère, qui sont disposés à des distances prédéfinies les uns des autres et qui assurent le découplage acoustique de la garniture d'étanchéité plate et ont une hauteur de l'ordre de 30 % à 50 % de la hauteur des profils d'étanchéité (4, 5).

2. Garniture d'étanchéité plate selon la revendication 1, **caractérisée en ce que** les éléments (7) sont réalisés avec une section de forme sensiblement semi-sphérique.

3. Garniture d'étanchéité plate selon la revendication 1 ou 2, **caractérisée en ce que** les éléments (7) sont disposés à une distance latérale prédéfinie par rapport aux profils d'étanchéité (4, 5).

4. Garniture d'étanchéité plate selon l'une quelconque des revendications 1 à 3, **caractérisée en ce que** les éléments (7) occupent plus de 50 % de la surface entre les profils d'étanchéité (4, 5).

5. Garniture d'étanchéité plate selon l'une quelconque des revendications 1 à 4, **caractérisée en ce que** les profils d'étanchéité (4, 5), de même que les éléments (7) sont prévus sur les deux faces frontales (9, 10) de l'élément de renforcement (8) métallique.
